# FASCICULE DE BREVET EUROPEEN

(11) **EP 3 361 859 B1**
(45) Date de publication et mention de la délivrance du brevet: **04.09.2019**
(21) Numéro de dépôt: 16791657.6
(22) Date de dépôt: 12.10.2016
(51) Int. Cl.: A01K 1/015

(54) **SYSTÈME POUR LE CONFORT THERMIQUE DES ANIMAUX DANS UNE ENCEINTE D'ÉLEVAGE**
SYSTEM FÜR DEN THERMISCHEN KOMFORT IN EINEM STALL
THERMAL COMFORT SYSTEM FOR AN ANIMAL STALL

(30) Priorité: 15.10.2015 FR 1559804
(43) Date de publication de la demande: 22.08.2018
(73) Titulaire: Bioret Agri-Logette Confort, 44390 Nort sur Erdre (FR)
(72) Inventeur: BIORET, Jean-Vincent, 44390 Petit Mars (FR)
(74) Mandataire: Jacobacci Coralis Harle
(86) Numéro de dépôt international: PCT/FR2016/052633
(87) Numéro de publication internationale: WO 2017/064417

(56) Documents cités:
- DE-U1-202008 008 592
- FR-A1- 2 672 966
- GB-A- 2 447 287
- US-A1- 2014 374 056

## Description

### DOMAINE TECHNIQUE AUQUEL SE RAPPORTE L'INVENTION

La présente invention concerne un système pour le confort thermique des animaux, par exemple pour les bovins laitiers et les bovins à viande, en particulier pour l'aménagement de logettes dans une enceinte d'élevage.

### ARRIERE-PLAN TECHNOLOGIQUE

Le confort des animaux constitue un paramètre déterminant dans le rendement d'un élevage.

Ce confort influence notamment la santé, la façon de s'alimenter, la prise alimentaire, la fertilité et la longévité des animaux.

A cet effet, de manière courante, en étable, les bovins se reposent individuellement dans des logettes, encore couramment appelées « free stall », dans lesquelles ils sont libres de se lever et de se coucher.

Lorsqu'ils effectuent ces mouvements, les animaux sont susceptibles de se blesser. C'est en particulier le cas lorsque la litière est constituée de paille recouvrant du béton, qui ne protège pas l'animal des risques de glissades.

Pour limiter ce type d'incident et les blessures qui en découlent, il est connu d'équiper le sol de ces logettes avec des matelas adaptés pour améliorer le confort de couchage des animaux.

Ces matelas de confort comprennent, classiquement, au moins une couche élastique qui est apte à subir une déformation élastique, sous-jacente d'une surface supérieure sur laquelle un animal prend appui.

Le confort comprend également une composante « thermique ».

En effet, en cas de forte chaleur ou d'un froid intense, les animaux sont susceptibles de subir un phénomène néfaste dit de « stress thermique ».

Un tel stress thermique se traduit notamment par des manifestations comportementales de défense, une chute des performances zootechniques, une détérioration des paramètres de la reproduction et une augmentation des pathologies.

Dans ce contexte, il existe un besoin de système visant à favoriser le confort thermique des animaux présents dans l'enceinte d'élevage, notamment lorsqu'ils se reposent au sein de leurs logettes. Les documents US2014/374056A1, FR2672966A1, DE202008008592U1, GB2447287A font partie de l'état de la technique pertinent.

### OBJET DE L'INVENTION

Dans ce contexte, la demanderesse a développé un système selon la revendication 1 pour le confort thermique des animaux dans une enceinte d'élevage, par exemple pour bovins laitiers ou pour bovins à viande, comprenant :
(a) au moins un matelas de confort qui comprend au moins une couche élastique et qui comporte deux faces opposées :
   - une face supérieure, apte à subir une déformation élastique et comportant au moins une zone d'accueil sur laquelle un animal est destiné à prendre appui, et
   - une face inférieure, destinée à reposer sur une surface de réception,
      laquelle au moins une couche élastique comporte plusieurs cavités étanches destinées à contenir un fluide caloporteur,
      lesquelles cavités étanches s'étendent parallèlement, ou au moins approximativement parallèlement, les unes par rapport aux autres,
      lesquelles cavités étanches sont sous-jacentes d'au moins une partie de ladite au moins une zone d'accueil, et comportent chacune au moins deux orifices débouchants,
(b) un fluide caloporteur, destiné à remplir lesdites cavités étanches,
(c) des moyens pour générer une circulation dudit fluide caloporteur au sein de chacune desdites cavités étanches, entre leurs orifices débouchants respectifs,
   lesquelles cavités étanches ont chacune une forme allongée rectiligne,
   laquelle au moins une couche élastique comporte deux bords transversaux,
   lesquels deux orifices débouchants des cavités étanches sont ménagés chacun au niveau de l'un desdits bords transversaux, et
   laquelle au moins une couche élastique comporte au moins une chambre étanche, destinée à contenir un fluide amortisseur et ménagée entre lesdites cavités étanches et ladite face supérieure dudit matelas,
   laquelle au moins une chambre étanche est sus-jacente desdites cavités étanches, et
   laquelle au moins une couche élastique comporte au moins un orifice débouchant pour l'accès à ladite au moins une chambre étanche.

Un tel système a ainsi pour intérêt de permettre un contrôle de la température du matelas de confort avec lequel l'animal est directement en contact.

Cette température est alors ajustée en fonction des conditions thermiques environnantes.

Par exemple, en cas de fortes chaleurs, le matelas de confort peut être réfrigéré en surface, de sorte à rafraichir l'animal en présence et ainsi à limiter l'augmentation de la température corporelle de ce dernier.

De manière alternative ou complémentaire, en cas de froid, le matelas de confort peut être chauffé de sorte à réchauffer l'animal présent.

Il est ainsi possible de limiter, voire de supprimer, le risque d'un stress thermique chez les animaux présents dans l'enceinte d'élevage.

D'autres caractéristiques non limitatives et avantageuses du système de confort thermique conforme à l'invention, prises individuellement ou selon toutes les combinaisons techniquement possibles, sont les suivantes :
- ledit matelas de confort est constitué par la couche élastique qui comporte des chambres étanches juxtaposées longitudinalement et sus-jacentes des cavités étanches ;
- lesdites cavités étanches sont réparties sur au moins un plan s'étendant parallèlement aux faces dudit au moins un matelas de confort ;
- ladite au moins une couche élastique comporte deux bords longitudinaux, et lesdites cavités étanches s'étendent parallèlement, ou au moins approximativement parallèlement, auxdits bords longitudinaux ; dans ce cas, les cavités étanches comprennent deux cavités étanches périphériques qui sont juxtaposées le long desdits bords longitudinaux, et l'une au moins desdites cavités étanches périphériques comporte avantageusement des extensions transversales, réparties sur sa longueur, qui s'étendent perpendiculairement à l'axe longitudinal de ladite cavité étanche périphérique et en direction dudit bord longitudinal juxtaposé ;
- les moyens pour générer une circulation dudit fluide caloporteur consistent en des moyens pour générer une circulation parallèle au sein desdites cavités étanches, entre lesdits orifices d'accès ;
- le système comprend au moins deux desdites zones d'accueil, et lesdites cavités étanches sont sous-jacentes d'une partie de chacune desdites zones d'accueil ;
- le système de confort comprend encore des moyens pour réguler la température dudit fluide caloporteur ; les moyens de régulation thermique sont avantageusement choisis parmi des moyens aptes à chauffer et/ou refroidir ledit fluide caloporteur ;
- ladite au moins une couche élastique est réalisée monobloc, laquelle couche élastique définit directement lesdites cavités étanches et le cas échéant ladite au moins une chambre étanche ;
- les moyens pour réguler la température dudit fluide caloporteur comprennent des moyens pour mesurer la température dudit fluide caloporteur et, éventuellement, des moyens pour afficher ladite température mesurée ;

La présente invention concerne encore une enceinte d'élevage équipée d'un système de confort selon l'invention.

De préférence, cette enceinte d'élevage comprend des logettes ; ledit au moins un matelas de confort recouvre le sol de l'une au moins desdites logettes ; et ledit au moins un matelas de confort comporte une pluralité de cavités étanches qui s'étendent au sein de l'une au moins desdites logettes.

L'invention concerne également un procédé pour améliorer le confort thermique des animaux dans une enceinte d'élevage selon l'invention.

Ce procédé comprend :
- une circulation du fluide caloporteur dans lesdites cavités étanches dudit au moins un matelas de confort, et
- une régulation de la température dudit fluide caloporteur, pour réguler la température de la face supérieure dudit au moins un matelas de confort.

### DESCRIPTION DETAILLEE DE L'INVENTION

L'invention sera encore illustrée, sans être aucunement limitée, par la description suivante de deux modes de réalisation particuliers en relation avec les figures annexées dans lesquelles :
- la figure 1 est une vue schématique et en perspective d'une série de logettes qui est équipée d'un système de confort ne faisant pas partie de l'invention, dont le matelas de confort consiste en une couche de confort réalisée en un matériau élastique qui est entourée par une couche élastique formant un film ;
- la figure 2 est une vue partielle et agrandie de la figure 1, montrant l'un des bords transversaux de la couche élastique dont les cavités étanches sont raccordées notamment aux moyens de circulation ;
- la figure 3 est encore une vue en perspective de l'un des bords transversaux de la couche élastique, pratiquement vue sur chant, avec les moyens de circulation qui sont masqués ;
- la figure 4 correspond à la figure 1, vue de dessus ;
- la figure 5 est une vue schématique, et de côté, des différentes pièces destinées à être assemblées pour constituer la couche élastique du système de confort selon les figures 1 à 4 ;
- la figure 6 est une vue schématique et en perspective d'un matelas de confort constitutif du système de confort selon l'invention, dans laquelle ledit matelas de confort est constitué ici par la couche élastique qui comporte des chambres étanches juxtaposées longitudinalement et sus-jacentes des cavités étanches ;
- la figure 7 est une vue partielle et agrandie de la figure 6, montrant l'un des bords transversaux de la couche élastique ;
- la figure 8 est une vue en coupe de la couche élastique selon les figures 6 et 7, selon un plan de coupe parallèle à ses bords transversaux ;
- la figure 9 est une vue schématique, et de côté, des différentes pièces destinées à être assemblées pour constituer la couche élastique du système de confort selon les figures 6 à 8.

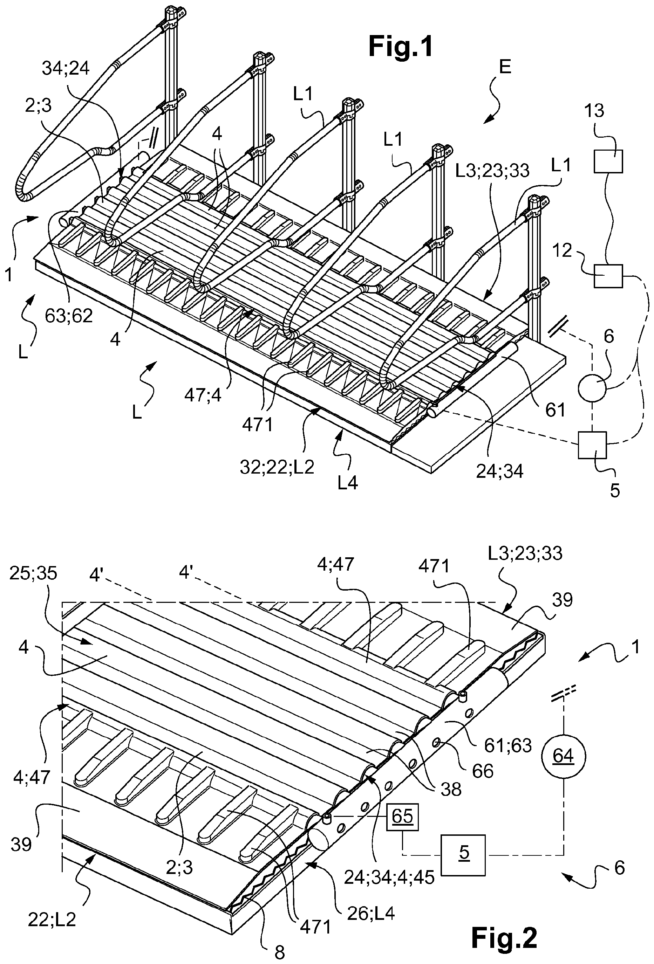

Le système de confort 1 selon l'invention est destiné à équiper une enceinte d'élevage E dans laquelle sont ménagées des stalles de couchage (figure 1).

L'enceinte d'élevage E consiste avantageusement en une étable pour l'élevage de bovins, en particulier de bovins laitiers ou de bovins à viande.

Les stalles de couchage consistent ici en des logettes L, ménagées sur au moins une ligne.

Les logettes L constituent un compromis entre un couchage confortable pour le bovin, le respect du mouvement levé/couché, une station debout confortable et un minimum de souillures dans la logette.

Selon la figure 1, chaque logette L, classique en soi, est délimitée par :
- deux séparations latérales L1, par exemple des structures tubulaires,
- un seuil arrière de logette L2, s'étendant le long d'un couloir d'accès,
- une limite avant L3, comprenant avantageusement une barre haute au garrot et un arrêtoir inférieur (ou limiteur d'avancement), formant le fond de la logette L, et
- un sol L4, par exemple une dalle de béton.

Le système de confort 1 selon l'invention, équipant cette série de logettes L, se compose des éléments suivants :
- au moins un matelas de confort 2, recouvrant le sol L4 de chacune des logettes L et équipé d'une couche élastique 3 comportant plusieurs cavités étanches 4 destinées à contenir un fluide caloporteur (non représenté),
- des moyens 5 pour réguler la température de ce fluide caloporteur (représentés sur les figures 1 et 2), et
- des moyens 6 pour générer une circulation du fluide caloporteur au sein des cavités étanches 4 de la couche élastique 3 (représentés sur les figures 1 et 2).

Le fluide caloporteur est avantageusement choisi parmi les liquides, par exemple l'eau ou un mélange eau/glycol.

### Matelas de confort

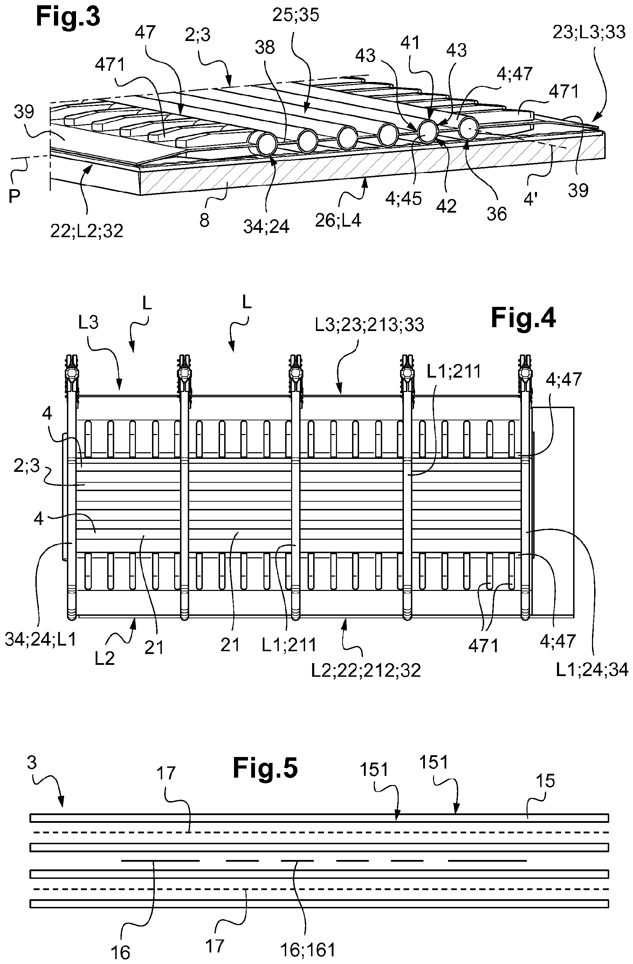

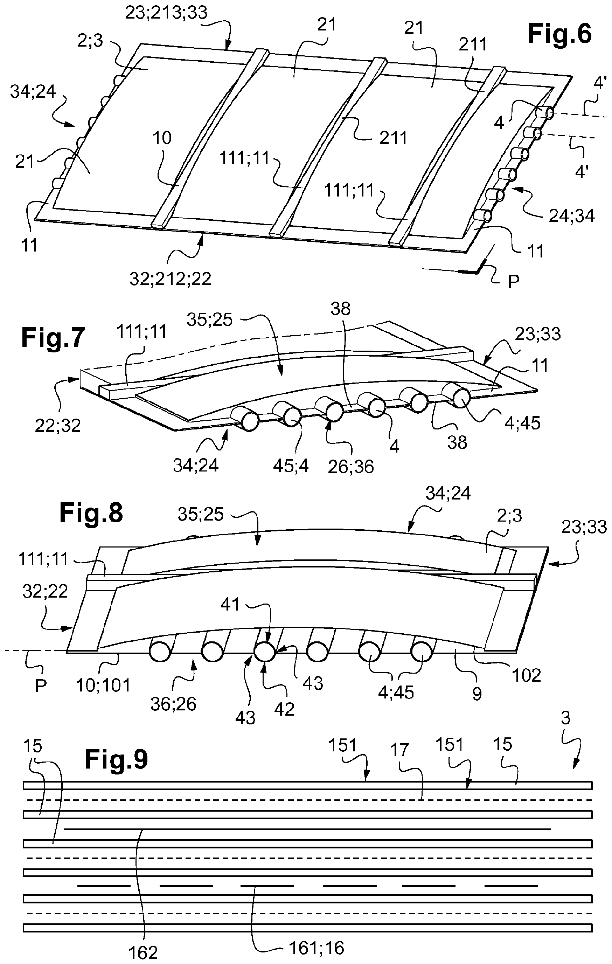

Le système de confort 1 comprend ici un matelas de confort 2 continu qui recouvre le sol L4 des logettes L alignées. Ce matelas de confort 2 comporte ainsi plusieurs zones d'accueil 21 qui sont juxtaposées sur la longueur dudit matelas de confort 2 (figures 4 et 6).

De manière alternative, non représentée, chaque logette L peut contenir son propre matelas de confort 2 qui définit alors une zone d'accueil 21 unique.

Le matelas de confort 2 a une forme générale rectangulaire qui est délimitée par deux couples de bords, à savoir :
- deux bords longitudinaux, à savoir un bord longitudinal arrière 22 destiné à s'étendre le long du seuil arrière L2 des logettes L équipées, et un bord longitudinal avant 23 destiné à s'étendre le long de la limite avant L3 de la ligne de logettes L, et
- deux bords transversaux 24, destinés à se situer au niveau des séparations latérales L1. des deux logettes L en bout de ligne.

Le matelas de confort 2 comporte encore deux faces opposées :
- une face supérieure 25, apte à subir une déformation élastique et formant les zones d'accueil 21 sur lesquelles les animaux sont destinés à prendre appui, et
- une face inférieure 26, destinée à reposer sur le sol L4 des logettes L.

Chacune des zones d'accueil 21 du matelas de confort 2 est destinée à accueillir ici un animal.

Chaque zone d'accueil 21 correspond ainsi à la surface au sol L4 d'une logette L, et est délimitée latéralement par deux séparations latérales L1.

Chacune des zones d'accueil 21 a alors une forme générale rectangulaire qui est délimitée par différentes bordures (figures 4 et 6) :
- deux bordures latérales 211, situées chacune à l'aplomb d'une séparation latérale L1 de logette L,
- une bordure arrière 212, attenante au seuil arrière L2 de la logette L (formant une partie du bord longitudinal arrière 22 du matelas de confort 2), et
- une bordure avant 213, attenante à la limite avant L3 de la logette L (formant une partie du bord longitudinal avant 23 du matelas de confort 2).

### Couche élastique du matelas de confort

Selon l'invention, la couche élastique 3 forme intégralement le matelas de confort 2 (figures 6 à 9).

Dans tous les cas, cette couche élastique 3 comporte également une forme générale rectangulaire qui est délimitée par deux couples de bords :
- deux bords longitudinaux, l'un arrière 32 et l'autre avant 33, ménagés respectivement au niveau des bords longitudinaux arrière 22 et avant 23 du matelas de confort 2, et
- deux bords transversaux 34, ménagés respectivement au niveau des bords transversaux 24 du matelas de confort 2.

La couche élastique 3 comporte encore deux faces opposées :
- une face supérieure 35, destinée à former la face supérieure 25 du matelas de confort 2, et
- une face inférieure 36, formant éventuellement la face inférieure 26 du matelas de confort 2.

Cette couche élastique 3 est réalisée dans au moins un matériau apte à subir une déformation élastique, dit encore « matériau élastique », choisi parmi :
- les matériaux élastomères, à savoir par exemple le caoutchouc naturel, le caoutchouc « naturel synthétique » (ou poly-isoprène synthétique), le polybutadiène ou le styrène-butadiène, ou
- les matériaux plastiques ou élastomères thermoplastiques (TPE), à savoir par exemple le PVB (polyvinyle de butyral), ABS (acrylonitrile butadiène styrène) / SBR (styrène-butadiène), PP (polypropylène) / EPDM (éthylène-propylène-diène monomère), TPU (TPE de polyuréthane).

Cette couche élastique 3 est avantageusement réalisée monobloc, soit mono-matériau (dans un seul matériau), soit multi-matériaux (avec au moins deux sous-couches superposées réalisées dans des matériaux différents).

La couche élastique 3 peut encore contenir des sous-couches de renfort décrites par la suite en relation avec les figures 5 et 9, choisies parmi les fibres textiles, les fibres de métal ou tout autre produit apportant la stabilité et/ou la résistance à l'élongation.

Ces sous-couches de renfort consistent par exemple en une armature textile servant de renfort, réalisée avantageusement en un matériau choisi parmi le nylon, le coton, le polyester, le polyamide ou tout autre textile de renfort.

La couche élastique 3 comporte, dans son épaisseur et au sein de son matériau constitutif, les cavités étanches 4. La couche élastique 3, et en particulier son matériau constitutif, définit ainsi directement les cavités étanches 4.

Les cavités étanches 4 sont juxtaposées et sont chacune sous-jacentes d'une partie des zones d'accueil 21 du matelas de confort 2. En d'autres termes, les zones d'accueil 21 du matelas de confort 2 sont sus-jacentes des cavités étanches 4 en présence.

Pour cela, les cavités étanches 4 consistent chacune en une structure tubulaire ayant une forme allongée rectiligne, définissant un axe longitudinal 4'.

Ces cavités étanches 4 sont ici au nombre de six. De manière générale, le nombre de cavités étanches 4 est avantageusement compris entre 5 et 10.

Les cavités étanches 4 sont réparties dans un plan P s'étendant parallèlement aux surfaces 25, 26 du matelas de confort 2.

Ces cavités étanches 4 (en particulier leurs axes longitudinaux respectifs 4') s'étendent ainsi parallèlement, ou au moins approximativement parallèlement, par rapport aux surfaces 25, 26 du matelas de confort 2.

Les cavités étanches 4 s'étendent également chacune sur toute la longueur de la couche élastique 3, entre ses bords transversaux 34 (et avantageusement sur toute la longueur du matelas de confort 2) ; et les cavités étanches 4 sont réparties sur la largeur de la couche élastique 3, entre ses bords longitudinaux 32, 33 (et avantageusement sur la largeur du matelas de confort 2).

Ces cavités étanches 4 (en particulier leurs axes longitudinaux 4' respectifs) s'étendent ainsi parallèlement, ou au moins approximativement parallèlement, les unes par rapport aux autres et par rapport aux bords longitudinaux 32, 33 de la couche élastique 3.

Chaque cavité étanche 4 comporte ainsi une succession de tronçons s'étendant entre les bordures latérales 211 de chaque zone d'accueil 21, perpendiculairement à ces dernières.

Ces cavités étanches 4 sont ici séparées, les unes par rapport aux autres, par une bande intercalaire 38 rectangulaire.

Par ailleurs, chaque cavité étanche 4 est délimitée par deux surfaces en regard, une surface supérieure 41 et une surface inférieure 42, qui se rejoignent au niveau de deux bordures latérales 43 (figures 3 et 8).

Chaque cavité étanche 4 présente ici une section verticale qui, à vide (non représentée), est de forme aplatie ou plane : la distance entre les bordures latérales 43 (largeur) est supérieure à la distance entre ses surfaces supérieure 41 / inférieure 42 en regard (hauteur).

Lorsqu'une cavité étanche 4 est remplie en fluide, sa section verticale est par exemple ronde, ovale ou elliptique, en fonction notamment de la pression du fluide, avec :
- les surfaces supérieure 41 / inférieure 42 qui sont courbes, concaves, et
- un grand axe (passant par ses bordures latérales 43) qui s'étend parallèlement aux faces 25, 26 du matelas de confort 2.

A titre uniquement indicatif, à vide, les cavités étanches 4 ont avantageusement une largeur, entre leurs deux bordures latérales 43 respectives, comprise entre 70 et 100 mm.

Les cavités étanches 4 sont en plus écartées, les unes des autres, d'une distance comprise entre 80 et 130 mm.

Ces cavités étanches 4, remplies en fluide, ont par exemple chacune une hauteur (selon leur petit axe vertical) comprise entre 60 et 100 mm.

Les cavités étanches 4 sont destinées chacune à contenir le fluide caloporteur qui est mis en circulation sur leurs longueurs respectives, pour réguler la température de la face supérieure 25 du matelas de confort 2.

Pour cela, chacune des cavités étanches 4 est terminée par deux orifices débouchants 45 qui sont ménagés chacun au niveau de l'un des bords transversaux 34 de la couche élastique 3.

Ces orifices débouchants 45 permettent un raccordement fluidique avec les moyens 5 pour réguler la température et avec les moyens 6 pour générer la circulation du fluide caloporteur.

Les cavités étanches 4 sont ici indépendantes fluidiquement les unes par rapport aux autres. Dans ce cas, le perçage de l'une des cavités étanches 4 ne provoquerait pas la vidange de l'ensemble des cavités étanches de la couche élastique 3.

Chacune des cavités étanches 4 comporte donc deux orifices débouchants 45 qui lui sont propres, pour la circulation du fluide caloporteur.

Les orifices débouchants 45 s'ouvrent ici directement au niveau des bords transversaux 35 de la couche élastique 3. De manière alternative, non représentée, les orifices débouchants 45 d'un même côté s'ouvrent dans un conduit ménagé dans la couche élastique 3, lui-même débouchant au niveau d'un bord de ladite couche élastique 3.

Les orifices débouchants 45 sont avantageusement obtenus par une découpe à longueur de la couche élastique 3, selon un trait de coupe orienté perpendiculairement aux bords longitudinaux 32, 33.

En effet, la couche élastique 3, avant sa pose, est avantageusement stockée sous forme d'un rouleau présentant une longueur de plusieurs mètres, en particulier supérieure à 3 mètres de long.

Cette forme de réalisation en rouleau a l'intérêt de permettre une pose simple et rapide de la couche élastique 3 dans l'enceinte d'élevage, par le déroulement le long d'une ligne de logettes L puis par une découpe adaptée à la longueur souhaitée de cette ligne.

De plus, l'épaisseur du matériau formant la cavité étanche 4 (en particulier son épaisseur au niveau de sa surface supérieure 43) est avantageusement minimale, par exemple comprise entre 2 et 5 mm, pour favoriser le transfert thermique par phénomène de conduction au travers dudit matériau.

Deux formes de réalisation particulières de ce matelas de confort 2 sont décrites ci-dessous.

### Première forme de réalisation du matelas de confort - ne faisant pas partie de l'invention

Une première forme de réalisation d'un matelas de confort 2, ne faisant pas partie de l'invention, est illustrée sur les figures 1 à 5.

La structure générale de ce matelas de confort est par exemple du genre du matelas Louisiane commercialisé par la société BIORET AGRI-LOGETTE CONFORT (Nort sur Erdre, France).

Selon ce premier mode de réalisation, le matelas de confort 2 comporte une couche de confort 8 inférieure constituée par une plaque de matériau élastique, par exemple une plaque de granulats de caoutchouc (agglomérés ou non agglomérés, ou de latex) (visible sur les figures 2 et 3).

La couche de confort 8 forme alors la face inférieure 26 du matelas de confort 2.

Cette couche de confort 8 est enveloppée dans la couche élastique 3 formant un film, qui vient remplacer un film classiquement mis en oeuvre (par exemple en matériau élastomère, PVC ou tissu).

Un tel mode de réalisation est intéressant notamment dans une utilisation « rénovation », dans laquelle le film usagé est remplacé tout en apportant une fonction supplémentaire de confort thermique.

Cette couche élastique 3 comporte ainsi les deux faces suivantes :
- la face supérieure 35 formant la face supérieure 25 du matelas de confort 2, et
- la face inférieure 36, enveloppant la couche de confort 8.

De préférence, l'épaisseur finale de la couche élastique 3 (une fois ses cavités étanches 4 remplies) est approximativement le double par rapport à l'épaisseur initiale de cette couche élastique 3 (avant remplissage).

Par exemple, l'épaisseur initiale de la couche élastique 3 est de l'ordre de 5 à 10 mm.

Les cavités étanches 4 ont une section continue sur leurs longueurs respectives.

Toutefois, les cavités étanches 4 s'étendant respectivement le long des bords longitudinaux 32, 33 de la couche élastique 3, dites encore « cavités étanches périphériques 47 », comportent chacune une pluralité d'extensions transversales 471.

Les extensions transversales 471 sont réparties sur la longueur de leurs cavités étanches périphériques 47 respectives.

Ces extensions transversales 471 s'étendent chacune perpendiculairement à l'axe longitudinal 4' de la cavité étanche périphérique 47 associée et en direction du bord longitudinal 32, 33 juxtaposé.

A titre indicatif, ces extensions transversales 471 ont chacune une longueur (avant/arrière) comprise entre 300 et 500 mm.

De telles structures permettent d'obtenir une face supérieure 35 dont la température est contrôlée, tout en formant un relief s'étendant dans une direction avant/arrière pour éviter un phénomène de retenue des matières biologiques produites par le bovin (lait, déjections, urines, etc.).

On favorise ainsi l'écoulement de ces matières biologiques en dehors du matelas de confort 2.

Cette couche élastique 3 est avantageusement solidarisée avec le sol par l'intermédiaire de profilés de type baguettes (non représentés), fixés par des pointes ou des clous, notamment le long des bordures avant 23 et arrière 22 du matelas de confort 2.

Pour cela, la couche élastique 3 comporte avantageusement deux bandes longitudinales 39, l'une avant et l'autre arrière, qui sont dépourvues de cavités étanches 4 et qui sont destinées à coopérer avec ces baguettes.

Ces bandes longitudinales 39 ont pour cela, par exemple, une largeur comprise entre 100 et 300 mm.

### Seconde forme de réalisation du matelas de confort

Une seconde forme de réalisation particulière d'un matelas de confort 2, celle-ci selon l'invention, est illustrée sur les figures 6 à 9.

Selon ce second mode de réalisation, le matelas de confort 2 est constitué directement par la couche élastique 3 qui comporte :
- les cavités étanches 4 qui sont réparties sur le plan P situé du côté de la face inférieure 26, 36 venant prendre appui sur le sol, et
- plusieurs chambres étanches 9 (ou poches étanches), remplies chacune avec un fluide amortisseur et sus-jacentes de ces cavités étanches 4 (l'une de ces chambres étanches 9 est visible sur la figure 8).

Cette couche élastique 3 comporte ainsi les faces supérieure 35 et inférieure 36, qui forment respectivement les faces supérieure 25 et inférieure 26 du matelas de confort 2.

Cette couche élastique 3 est ici formée par une superposition de deux peaux 10 (figure 8) :
- une peau inférieure 101, dans laquelle sont ménagées les cavités étanches 4, et
- une peau supérieure 102, solidarisée de manière monobloc avec la peau inférieure 101 sur leurs pourtours respectifs, pour délimiter les chambres étanches 9.

La régulation thermique entre les cavités étanches 4 et la face supérieure 35 de la couche élastique 3 s'effectue alors via les chambres étanches 9, par un phénomène de convection thermique assuré par le fluide amortisseur.

De préférence, chaque zone d'accueil 21 comporte alors l'une de ces chambres étanches 9, qui lui est propre.

La couche élastique 3 comporte ainsi une succession de poches étanches 9 juxtaposées, qui correspondent chacune à l'une des zones d'accueil 21.

Chaque chambre étanche 9 comporte, vue de dessus, un contour rectangulaire correspondant au moins approximativement à la surface d'une logette L.

Le fluide destiné à remplir chaque chambre étanche 9 est avantageusement choisi parmi l'eau, un gaz (l'air notamment), un gel.

Chaque chambre étanche 9 est pour cela associée à un orifice débouchant (non représenté) pour son accès, notamment pour son remplissage et/ou sa vidange, par exemple un orifice équipé d'une valve.

La valve est raccordée de manière étanche avec l'orifice débouchant, par exemple via un sertissage métallique.

Le fluide remplissant la chambre étanche 9 est fixe, c'est-à-dire sans phénomène de circulation entre deux orifices (contrairement au fluide caloporteur remplissant les cavités étanches 4).

Chaque chambre étanche 9 est ainsi individuelle. Et elle est destinée à reprendre sa forme quand l'animal se retire.

La surface supérieure de chaque chambre étanche 9 présente avantageusement une section transversale (selon un plan parallèle aux bords transversaux 24 - figure 8) qui a une forme générale courbe convexe.

Cette forme particulière forme des pentes avant et arrière qui favorisent l'écoulement des matières biologiques en dehors dudit matelas de confort 3.

Deux chambres étanches 9 juxtaposées sont séparées par une bande transversale 11 s'étendant entre les bords longitudinaux 22, 23.

Ces bandes transversales 11 ont deux fonctions :
- elles constituent les lignes pour la coupure à longueur de la couche élastique 3, de sorte à obtenir les orifices débouchants 45, et
- elles sont destinées à être recouvertes par un élément transversal de fixation 111, par exemple une plinthe, pour permettre une fixation de la couche élastique 3 tout en assurant le passage du fluide caloporteur.

De préférence, l'épaisseur finale de la peau inférieure 101 (une fois ses cavités étanches 4 remplies) est approximativement le double par rapport à son épaisseur initiale (avant remplissage).

Par exemple, l'épaisseur initiale de la peau inférieure 101 est de l'ordre de 5 à 10 mm.

Toujours de préférence, l'épaisseur finale d'une chambre étanche 9 (ici au niveau de sa flèche) est avantageusement comprise entre 10 et 50 mm.

Encore de préférence, l'épaisseur initiale de la couche élastique 3 (avant remplissage) est comprise entre 6 et 20 mm.

Les chambres étanches 9 ont par exemple une largeur (parallèlement aux bords longitudinaux 22, 23) de l'ordre de 1 m ; les bandes transversales 11 ont quant à elles avantageusement une largeur de l'ordre de 100 mm.

De manière générale, les chambres étanches 9 ont l'intérêt de constituer des éléments amortisseurs, ou tampons, s'étendant au-dessus des cavités étanches 4.

Chaque chambre étanche 9 assure une répartition du poids de l'animal au sein de la zone d'accueil 21, et permet ainsi de réduire significativement les efforts d'appui s'exerçant sur les cavités étanches 4.

Le risque d'obturation, ou de détérioration, des cavités étanches 4 par phénomène d'écrasement est ainsi significativement réduit. Il est ainsi possible de réduire la pression au sein des cavités étanches 4.

### Moyens de circulation du fluide caloporteur

Par ailleurs et de manière générale, le système de confort 1 comporte les moyens 6 pour générer la circulation du fluide caloporteur, dits encore « moyens de circulation » (les figures 1 et 2 montrent une mise en oeuvre pour le premier mode de réalisation ; des branchements identiques sont réalisés pour la mise en oeuvre du second mode de réalisation).

Ces moyens de circulation 6 assurent une répartition et une circulation parallèle du fluide caloporteur, le long des cavités étanches 4.

Ces moyens de circulation 6 comprennent pour cela :
- des moyens de raccordement fluidique amont 61, pour une alimentation en fluide, qui sont connectés en parallèle aux orifices débouchants 45 des cavités étanches 4 situés au niveau d'un premier bord transversal 34 de la couche élastique 3, et
- des moyens de raccordement fluidique aval 62, pour une collecte du fluide en sortie, qui sont connectés en parallèle aux orifices débouchants 45 des cavités étanches 4 situés au niveau d'un second bord transversal 34 de la couche élastique 3.

Les moyens de raccordement fluidique amont 61 / aval 62 comportent chacun notamment un dispositif de type clarinette 63, afin d'assurer la circulation parallèle du fluide caloporteur au sein de chacune des cavités étanches 4.

La connexion d'une clarinette 63 avec les orifices débouchants 45 attenants s'effectue avantageusement par le biais de moyens mécaniques d'étanchéité classiques.

Ces moyens de raccordement fluidique amont 61 / aval 62 peuvent être raccordés fluidiquement, pour la recirculation ou le recyclage de ce fluide caloporteur.

Les moyens de circulation 6 comprennent encore une pompe 64, pour provoquer le cheminement du fluide caloporteur.

Les moyens de raccordement fluidique amont 61 sont avantageusement équipés de moyens régulateurs de pression 65 et/ou de moyens régulateurs de débit 66.

Ainsi, la pression au sein des cavités étanches 4 est avantageusement réglée entre 0,3 et 3 bars, de préférence entre 1 et 1,5 bars.

Les moyens de raccordement fluidique amont 61 sont en plus avantageusement équipés des moyens 66 pour réguler le débit au sein de chacune des cavités étanches 4.

### Moyens de régulation de la température

Les moyens 5 pour réguler la température du fluide caloporteur (dits encore « moyens de régulation 5 ») équipent les moyens de circulation 6, avantageusement au niveau des moyens de raccordement fluidique amont 61.

Ces moyens de régulation 5 sont choisis parmi des moyens aptes à chauffer et/ou à refroidir le fluide caloporteur.

Par exemple, ces moyens de régulation 5 consistent en une pompe à chaleur, réversible avec mesure de la température.

Les moyens de régulation 5 comprennent avantageusement :
- des moyens pour mesurer la température de ce fluide caloporteur, par exemple une sonde de température, et
- éventuellement des moyens pour afficher la température mesurée.

Ces moyens de régulation 5 sont optionnels, notamment dans le cas où le fluide caloporteur présente initialement la température recherchée (par exemple une source d'eau fraiche pour le refroidissement du matelas de confort 2).

### Moyens de commande

Le système de confort 1 comporte encore avantageusement des moyens de commande 12 pour piloter le fonctionnement des moyens de régulation 5 et des moyens de circulation 6.

Ces moyens de commande 12 sont choisis par exemple parmi :
- des moyens de commande manuelle,
- des moyens de commande du type programmateur (pour un fonctionnement selon des cycles prédéfinis), et
- des moyens de commande automatique, avantageusement notamment un programme informatique exécuté par un ordinateur.

Ces moyens de commande 12 sont alors avantageusement raccordés également avec des moyens 13 pour la mesure de la température au sein de l'enceinte d'élevage E.

### Fonctionnement

De sorte à prévenir un stress thermique potentiel, les moyens de commande 12 peuvent piloter automatiquement les moyens de régulation 5 et les moyens de circulation 6, tenant compte avantageusement de la température ambiante au sein de l'enceinte d'élevage E acquise par les moyens de mesure 13.

En présence de conditions thermiques environnantes défavorables, les moyens de commande 12 génèrent alors :
- une circulation du fluide caloporteur dans les cavités étanches 4 du ou des matelas de confort 2 par le biais des moyens de circulation 6, et
- une régulation de la température du fluide caloporteur par le biais des moyens de régulation 5,
de sorte à ajuster la température de la face supérieure 25 du matelas de confort 2.

La circulation du fluide caloporteur dans les cavités étanches 4 s'effectue ici en parallèle : le courant de fluide caloporteur se divise afin de traverser simultanément ces cavités étanches 4.

Cette circulation du fluide caloporteur s'effectue également dans un même sens au sein des cavités étanches 4 juxtaposées : le fluide chemine ainsi depuis les orifices débouchants 45 situés au niveau d'un premier bord transversal 34 de la couche élastique 3 (à droite sur la figure 1) jusqu'aux orifices débouchants 45 situés au niveau d'un second bord transversal 34 de la couche élastique 3 (à gauche sur la figure 1).

En mode refroidissement, le fluide caloporteur peut être naturellement froid (par exemple une source d'eau à une température comprise entre 1°C et 15°C) ou il peut être refroidi par les moyens de régulation 5. Le système de confort 1 selon l'invention permet ainsi d'apporter directement une réduction de la température de l'animal au sein de sa logette L.

Ainsi, en configuration de marche, le système de confort 1 selon l'invention permet de refroidir la face supérieure 25 du matelas de confort 2 qui rafraichit le pelage de la vache et qui limite l'augmentation de sa température corporelle.

Inversement, en mode chauffage, le fluide caloporteur est réchauffé. Le système de confort 1 selon l'invention permet d'apporter directement de la chaleur à l'animal au sein de sa logette L.

Lorsque le risque de stress thermique est écarté, les moyens de commande 12 pilotent automatiquement l'arrêt des moyens de circulation 6 et de régulation 5.

### Fabrication de la couche élastique

La couche élastique 3 selon l'invention peut être fabriquée par l'assemblage d'un ensemble de sous-couches superposées, pour former un ensemble de type monobloc.

La technologie d'assemblage peut être choisie par exemple parmi - la vulcanisation, - le collage, - le soudage.

Tel qu'illustré sur la figure 5 pour le premier mode de réalisation et sur la figure 9 pour le second mode de réalisation, le procédé pour la fabrication de la couche élastique 3 comprend :
(i) une étape de superposition de sous-couches en matériau élastomère 15 comportant deux surfaces opposées 151, entre lesquelles sont rapportés :
   - des moyens intercalaires 16 aptes à empêcher localement la solidarisation des surfaces 151 en regard desdites couches 15 pour former les cavités étanches 4 et le cas échéant les chambres étanches 9, et
   - éventuellement des couches de renfort 17, puis
(ii) une étape de solidarisation des surfaces 151 en contact desdites sous-couches superposées 15 (c'est-à-dire en dehors de l'encombrement des moyens intercalaires 16), de sorte que les moyens intercalaires 16 forment les cavités étanches 4 et le cas échéant les chambres étanches 9.

Les moyens intercalaires 16 consistent en tout moyen évitant la solidarisation entre les surfaces 151 en regard des couches 15 à assembler.

Dans le cas d'une vulcanisation, les moyens intercalaires 16 consistent par exemple en des bandes ou des tubes qui sont avantageusement réalisés dans un matériau choisi parmi :
- un film anti-feu contenant un retardateur, par exemple en polypropylène, en acrylonitrile butadiène styrène,
- une couche de silicone,
- une couche d'un matériau élastomère vulcanisé, par exemple un tuyau réalisé par exemple en caoutchouc styrène-butadiène (SBR), en caoutchouc naturel (NR), ou en éthylène-propylène-diène monomère.

Ces moyens intercalaires 16 sont en particulier disposés entre deux couches élastomères 15 à assembler l'une avec l'autre.

De manière générale, ces moyens intercalaires 16 sont répartis à façon, en fonction de l'agencement recherché des cavités étanches 4 et le cas échéant des chambres étanches 9.

En l'espèce, comme illustré sur la figure 5 pour le premier mode de réalisation, l'étape de superposition comprend une superposition de quatre sous-couches en matériau élastomère 15 avec une sous-couche de moyens intercalaires 16 qui est rapportée entre deux desdites sous-couches en matériau élastomère 15.

La sous-couche de moyens intercalaires 16 comporte plusieurs bandes 161 qui sont juxtaposées sur la largeur des deux sous-couches en matériau élastomère 15 pour former les cavités étanches 4 juxtaposées (y compris les cavités étanches périphériques 47).

Comme illustré sur la figure 9 pour le second mode de réalisation, l'étape de superposition comprend une superposition de six sous-couches en matériau élastomère 15 avec deux sous-couches de moyens intercalaires 16 qui sont rapportées chacune entre deux sous-couches en matériau élastomère 15.

En particulier :
- une sous-couche inférieure comporte plusieurs bandes 161 qui sont juxtaposées sur la largeur des sous-couches en matériau élastomère 15 pour former les cavités étanches 4 juxtaposées, et
- une sous-couche supérieure comporte plusieurs rectangles 162 qui sont répartis sur la longueur des sous-couches en matériau élastomère 15, pour former les chambres étanches 9.

De manière générale, le système de confort selon l'invention a l'intérêt de mettre en oeuvre des matelas de confort dont la face supérieure est régulée de manière optimale en température, cela de manière à assurer un confort thermique optimal des animaux.

Les matelas de confort ont l'intérêt d'être posés d'une manière classique, avantageusement par déroulement de mur à mur.

La pression surfacique sur l'animal est réduite par rapport à un couchage sur une structure en béton. La circulation sanguine de l'animal est améliorée.

## Revendications

1. Système pour le confort thermique des animaux dans une enceinte d'élevage, **caractérisé en ce qu'**il comprend :
(a) au moins un matelas de confort (2) qui comprend au moins une couche élastique (3) et qui comporte deux faces opposées :
- une face supérieure (25), apte à subir une déformation élastique et comportant au moins une zone d'accueil (21) sur laquelle un animal est destiné à prendre appui, et
- une face inférieure (26), destinée à reposer sur une surface de réception (L4),
laquelle au moins une couche élastique (3) comporte plusieurs cavités étanches (4) destinées à contenir un fluide caloporteur,
lesquelles cavités étanches (4) sont sous-jacentes d'au moins une partie de ladite au moins une zone d'accueil (21), et
lesquelles cavités étanches (4) s'étendent parallèlement, ou au moins approximativement parallèlement, les unes par rapport aux autres, et comportent chacune au moins deux orifices débouchants (45),
(b) un fluide caloporteur, destiné à remplir lesdites cavités étanches (4), et
(c) des moyens (6) pour générer une circulation dudit fluide caloporteur au sein de chacune desdites cavités étanches (4), entre leurs orifices débouchants (45) respectifs,
**caractérisé en ce que** les cavités étanches (4) ont chacune une forme allongée rectiligne,
**en ce que** ladite au moins une couche élastique (3) comporte deux bords transversaux (34),
**en ce que** les deux orifices débouchants (45) des cavités étanches (4) sont ménagés chacun au niveau de l'un desdits bords transversaux (34), et
**en ce que** ladite au moins une couche élastique (3) comporte au moins une chambre étanche (9), destinée à contenir un fluide amortisseur et ménagée entre lesdites cavités étanches (4) et ladite face supérieure (25) dudit matelas (2),
laquelle au moins une chambre étanche (9) est sus-jacente desdites cavités étanches (4), et
laquelle au moins une couche élastique (3) comporte au moins un orifice débouchant pour l'accès à ladite au moins une chambre étanche (9).

2. Système pour le confort thermique des animaux, selon la revendication 1, **caractérisé en ce que** ledit matelas de confort (2) est constitué par la couche élastique (3) qui comporte des chambres étanches (9) juxtaposées longitudinalement et sus-jacentes des cavités étanches (4).

3. Système pour le confort thermique des animaux, selon l'une quelconque des revendications 1 ou 2, **caractérisé en ce que** lesdites cavités étanches (4) sont réparties sur au moins un plan (P) s'étendant parallèlement aux faces (25, 26) dudit au moins un matelas de confort (2).

4. Système pour le confort thermique des animaux, selon l'une quelconque des revendications 1 à 3, **caractérisé en ce que** ladite au moins une couche élastique (3) comporte deux bords longitudinaux (32, 33),
et **en ce que** lesdites cavités étanches (4) s'étendent parallèlement, ou au moins approximativement parallèlement, auxdits bords longitudinaux (32, 33).

5. Système pour le confort thermique des animaux, selon la revendication 4, **caractérisé en ce que** les cavités étanches (4) comprennent deux cavités étanches périphériques (47) qui sont juxtaposées le long desdits bords longitudinaux (32, 33),
et **en ce que** l'une au moins desdites cavités étanches périphériques (47) comporte des extensions transversales (471), réparties sur sa longueur, qui s'étendent perpendiculairement à l'axe longitudinal (4') de ladite cavité étanche périphérique (471) et en direction dudit bord longitudinal (32, 33) juxtaposé.

6. Système pour le confort thermique des animaux, selon l'une quelconque des revendications 1 à 5, **caractérisé en ce que** les moyens (6) pour générer une circulation dudit fluide caloporteur consistent en des moyens pour générer une circulation parallèle au sein desdites cavités étanches (4), entre lesdits orifices débouchants (45).

7. Système pour le confort thermique des animaux, selon l'une quelconque des revendications 1 à 6, **caractérisé en ce qu'**il comprend au moins deux desdites zones d'accueil (21),
et **en ce que** lesdites cavités étanches (4) sont sous-jacentes d'une partie de chacune desdites zones d'accueil (21).

8. Système pour le confort thermique des animaux, selon l'une quelconque des revendications 1 à 7, **caractérisé en ce qu'**il comprend encore des moyens (5) pour réguler la température dudit fluide caloporteur.

9. Système pour le confort thermique des animaux, selon la revendication 8, **caractérisé en ce que** les moyens de régulation thermique (5) sont choisis parmi des moyens aptes à chauffer et/ou refroidir ledit fluide caloporteur.

10. Système pour le confort thermique des animaux, selon l'une quelconque des revendications 1 à 9, **caractérisé en ce que** ladite au moins une couche élastique (3) est réalisée monobloc, laquelle couche élastique (3) définit directement lesdites cavités étanches (4) et ladite au moins une chambre étanche (9).

11. Enceinte d'élevage équipée d'un système de confort (1) selon l'une quelconque des revendications 1 à 10.

12. Enceinte d'élevage selon la revendication 11, **caractérisée en ce qu'**elle comprend des logettes (L),
**en ce que** ledit au moins un matelas de confort (2) recouvre le sol (L4) de l'une au moins desdites logettes (L),
et **en ce que** ledit au moins un matelas de confort (2) comporte une pluralité de cavités étanches (4) qui s'étendent au sein de l'une au moins desdites logettes (L).

13. Procédé pour améliorer le confort thermique des animaux dans une enceinte d'élevage selon l'une quelconque des revendications 11 ou 12,
lequel procédé comprend :
- une circulation du fluide caloporteur dans lesdites cavités étanches (4) dudit au moins un matelas de confort (2), et
- éventuellement une régulation de la température dudit fluide caloporteur,
pour réguler la température de la face supérieure (25) dudit au moins un matelas de confort (2).

## Patentansprüche

1. System für den thermischen Komfort der Tiere in einer Zuchtanlage, **dadurch gekennzeichnet, daß** es
(a) wenigstens eine Komfortmatratze (2), die wenigstens eine elastische Schicht (3) aufweist und die zwei voneinander abgewandte Seiten aufweist:
- eine obere Seite (25), die dazu ausgelegt ist, eine elastische Verformung zu vertragen, und die wenigstens einen Aufnahmebereich (21) aufweist, auf dem sich ein Tier aufhalten soll, und
- eine untere Seite (26), die dazu bestimmt ist, auf einer Aufnahmefläche (L4) aufzuliegen,
wobei die wenigstens eine elastische Schicht (3) mehrere dichte Hohlräume (4) aufweist, die dazu bestimmt sind, ein Wärmetauschfluid zu enthalten,
wobei die dichten Hohlräume (4) unter wenigstens einem Teil des wenigstens einen Aufnahmebereichs (21) angeordnet sind und
wobei sich die dichten Hohlräume (4) parallel oder wenigstens näherungsweise parallel zueinander erstrecken und jeweils wenigstens zwei Durchgangslöcher (45) aufweisen,
(b) ein Wärmetauschfluid, das dazu bestimmt ist, die dichten Hohlräume (4) zu füllen, und
(c) Mittel (6) zum Erzeugen eines Flusses des Wärmetauschfluids innerhalb jedes der dichten Hohlräume (4) zwischen deren jeweiligen Durchgangslöchern (45)
aufweist,
**dadurch gekennzeichnet, daß** die dichten Hohlräume (4) jeweils eine längliche geradlinige Form aufweisen,
daß die wenigstens eine elastische Schicht (3) zwei Querränder (34) aufweist,
daß die beiden Durchgangslöcher (45) der dichten Hohlräume (4) jeweils im Bereich eines der Querränder (34) angeordnet sind und daß die wenigstens eine elastische Schicht (3) wenigstens eine dichte Kammer (9) aufweist, die dazu bestimmt ist, ein Dämpfungsfluid zu enthalten, und die zwischen den dichten Hohlräumen (4) und der oberen Seite (25) der Matratze (2) angeordnet ist,
wobei die wenigstens eine dichte Kammer (9) unterhalb der dichten Hohlräume (4) angeordnet ist und
wobei die wenigstens eine elastische Schicht (3) wenigstens ein Durchgangsloch für den Zugang zu der wenigstens einen dichten Kammer (9) aufweist.

2. System für den thermischen Komfort der Tiere gemäß Anspruch 1, **dadurch gekennzeichnet, daß** die Komfortmatratze (2) durch die elastische Schicht (3) gebildet ist, die die längs nebeneinander und unter den dichten Hohlräumen (4) angeordneten dichten Kammern (9) aufweist.

3. System für den thermischen Komfort der Tiere gemäß einem der Ansprüche 1 oder 2, **dadurch gekennzeichnet, daß** die dichten Hohlräume (4) über wenigstens eine Ebene (P) verteilt sind, die sich parallel zu den Seiten (25, 26) der wenigstens einen Komfortmatratze (2) erstreckt.

4. System für den thermischen Komfort der Tiere gemäß einem der Ansprüche 1 bis 3, **dadurch gekennzeichnet, daß** die wenigstens eine elastische Schicht (3) zwei Längsränder (32, 33) aufweist und daß sich die dichten Hohlräume (4) parallel oder wenigstens näherungsweise parallel zu den Längsrändern (32, 33) erstrecken.

5. System für den thermischen Komfort der Tiere gemäß Anspruch 4, **dadurch gekennzeichnet, daß** die dichten Hohlräume (4) zwei dichte Umfangshohlräume (47) aufweisen, die entlang der Längsränder (32, 33) nebeneinander liegen,
und daß wenigstens einer der dichten Umfangshohlräume (47) quer verlaufende, über dessen Länge verteilte Ausweitungen (471) aufweist, die sich quer zur Längsachse (4') des dichten Umfangshohlraums (471) und in Richtung auf den danebenliegenden Längsrand (32, 33) erstrecken.

6. System für den thermischen Komfort der Tiere gemäß einem der Ansprüche 1 bis 5, **dadurch gekennzeichnet, daß** die Mittel (6) zum Erzeugen eines Flusses des Wärmetauschfluids aus Mitteln zum Erzeugen eines parallelen Flusses in den dichten Hohlräumen (4) zwischen den Durchgangslöchern (45) bestehen.

7. System für den thermischen Komfort der Tiere gemäß einem der Ansprüche 1 bis 6, **dadurch gekennzeichnet, daß** es wenigstens zwei der Aufnahmebereiche (21) aufweist und daß die dichten Hohlräume (4) unter einem Teil jedes der Aufnahmeräume (21) angeordnet sind.

8. System für den thermischen Komfort der Tiere gemäß einem der Ansprüche 1 bis 7, **dadurch gekennzeichnet, daß** es außerdem Mittel (5) zum Regeln der Temperatur des Wärmetauschfluids aufweist.

9. System für den thermischen Komfort der Tiere gemäß Anspruch 8, **dadurch gekennzeichnet, daß** die Mittel (5) zum thermischen Regeln unter den Mitteln ausgewählt sind, die geeignet sind, das Wärmetauschfluid zu erwärmen und/oder abzukühlen.

10. System für den thermischen Komfort der Tiere gemäß einem der Ansprüche 1 bis 9, **dadurch gekennzeichnet, daß** die wenigstens eine elastische Schicht (3) einstückig gefertigt ist, wobei die elastische Schicht (3) die dichten Hohlräume (4) und die wenigstens eine dichte Kammer (9) direkt definiert.

11. Zuchtanlage, die mit einem Komfortsystem (1) gemäß einem der Ansprüche 1 bis 10 ausgestattet ist.

12. Zuchtanlage gemäß Anspruch 11, **dadurch gekennzeichnet, daß** sie Liegeabschnitte (L) aufweist,
daß die wenigstens eine Komfortmatratze (2) den Boden (L4) wenigstens eines der Liegeabschnitte (L) bedeckt und daß die wenigstens eine Komfortmatratze (2) eine Anzahl dichter Hohlräume (4) aufweist, die sich in wenigstens einem der Liegeabschnitte (L) erstrecken.

13. Verfahren zum Verbessern des thermischen Komforts der Tiere in einer Zuchtanlage gemäß einem der Ansprüche 11 oder 12, wobei das Verfahren
- einen Fluß des Wärmetauschfluids in den dichten Hohlräumen (4) der wenigstens einen Komfortmatratze (2) und
- gegebenenfalls eine Regelung der Temperatur des Wärmetauschfluids
aufweist, um die Temperatur der oberen Seite (25) der wenigstens einen Komfortmatratze (2) zu regeln.

## Claims

1. A system for thermal comfort of animals in a livestock enclosure, **characterized in that** it comprises:
(a) at least one comfort mattress (2) that comprises at least one resilient layer (3) and that has two opposite faces:
- an upper face (25), adapted to undergo an elastic deformation and including at least one accommodation area (21) on which an animal is intended to rest, and
- a lower face (26), intended to rest on a receiving surface (L4),
wherein said at least one resilient layer (3) includes several sealed cavities (4) intended to contain a heat-transfer fluid,
wherein said sealed cavities (4) underlie at least one portion of said at least one accommodation area (21), and
wherein said sealed cavities (4) extend parallel, or at least approximately parallel, relative to each other, and each include at least two through-orifices (45),
(b) a heat-transfer fluid, intended to fill said sealed cavities (4), and
(c) means (6) for generating a circulation of said heat-transfer fluid within each of said sealed cavities (4), between their respective through-orifices (45).
**characterized in that** the sealed cavities (4) each have an elongated rectilinear shape,
**in that** said at least one resilient layer (3) includes two transverse edges (34),
**in that** the two through-orifices (45) of the sealed cavities (4) are each arranged at one of said transverse edges (34), et
**in that** said at least one resilient layer (3) includes at least one sealed chamber (9), intended to contain a damping fluid and arranged between said sealed cavities (4) and said upper face (25) of said mattress (2),
wherein said at least sealed chamber (9) is overlying said sealed cavities (4), and
wherein said at least one resilient layer (3) includes at least one through-orifice for the access to said at least one sealed chamber (9).

2. The system for thermal comfort of animals according to claim 1, **characterized in that** said comfort mattress (2) is constituted by the resilient layer (3) which includes a succession of sealed chamber (9) juxtaposed longitudinally and overlying said sealed cavities (4).

3. The system for thermal comfort of animals according to any one of claim 1 or 2, **characterized in that** said sealed cavities (4) are distributed over at least one plane (P) extending parallel to the faces (25, 26) of said at least one comfort mattress (2).

4. The system for thermal comfort of animals according to any one of claims 1 to 3, **characterized in that** said at least one resilient layer (3) includes two longitudinal edges (32, 33),
and **in that** said sealed cavities (4) extend parallel, or at least approximately parallel, to said longitudinal edges (32, 33).

5. The system for thermal comfort of animals according to claim 4, **characterized in that** the sealed cavities (4) comprise two peripheral sealed cavities (47) that are juxtaposed along said longitudinal edges (32, 33),
and **in that** one at least of said peripheral sealed cavities (47) includes transverse extensions (471), distributed over the length thereof, that extend perpendicular to the longitudinal axis (4') of said peripheral sealed cavity (471) and towards said juxtaposed longitudinal edge (32, 33).

6. The system for thermal comfort of animals according to any one of claims 1 to 5, **characterized in that** the means (6) for generating a circulation of said heat-transfer fluid preferably consist of means for generating a parallel circulation within said sealed cavities (4), between said through-orifices (45).

7. The system for thermal comfort of animals according to any one of claims 1 to 6, **characterized in that** it comprises at least two of said accommodation areas (21),
and **in that** said sealed cavities (4) underlie a portion of each of said accommodation areas (21).

8. The system for thermal comfort of animals according to any one of claims 1 to 7, **characterized in that** it also comprises means (5) for regulating the temperature of said heat-transfer fluid.

9. The system for thermal comfort of animals according to claim 8, **characterized in that** the heat regulation means (5) are chosen among means adapted to heat up and/or cool down said heat-transfer fluid.

10. The system for thermal comfort of animals according to any one of claims 1 to 9, **characterized in that** said at least one resilient layer (3) is made single-piece, said resilient layer (3) defining directly said sealed cavities (4) and, as the case may be, said at least one sealed chamber (9).

11. A livestock enclosure equipped with a comfort system (1) according to any one of claims 1 to 10.

12. The livestock enclosure according to claim 11, **characterized in that** it comprises stalls (L),
and **in that** said at least one comfort mattress (2) covers the ground (L4) of one at least of said stalls (L),
and said at least one comfort mattress (2) includes a plurality of sealed cavities (4) that extend within at least one of said stalls (L).

13. A method for improving the thermal comfort of the animals in a livestock enclosure according to any one of claim 11 or 12,
wherein said method comprises:
- a circulation of the heat-transfer fluid within said sealed cavities (4) of said at least one comfort mattress (2), and
- possibly a regulation of the temperature of said heat-transfer fluid,
for regulating the temperature of the upper face (25) of said at least one comfort mattress (2).
